# NEUE EUROPÄISCHE PATENTSCHRIFT

(11) **EP 0 784 073 B2**
(45) Veröffentlichungstag und Bekanntmachung des Hinweises auf die Entscheidung über den Einspruch: **06.06.2012**
(45) Hinweis auf die Patenterteilung: 11.09.2002
(21) Anmeldenummer: 96120355.1
(22) Anmeldetag: 18.12.1996
(51) Int. Cl.: C08L 23/02, C08J 5/18

(54) **Folien und Schichten**
Films and sheets
Films et feuilles

(30) Priorität: 27.12.1995 DE 19548788
(43) Veröffentlichungstag der Anmeldung: 16.07.1997
(73) Patentinhaber: Basell Polyolefine GmbH, 50389 Wesseling (DE)
(72) Erfinder: Winter, Andreas, Dr., 61479 Glashütten (DE); Hofmann, Ernst, Dr.-Ing., 63808 Haibach (DE); Wieners, Gerhard, Dr., 60320 Frankfurt (DE); Bachmann, Bernd, Dr., 65817 Eppstein (DE)

(56) Entgegenhaltungen:
- EP-A- 0 040 298
- EP-A- 0 485 822
- EP-A- 0 496 260
- EP-A1- 0 567 952
- EP-A1- 0 646 624
- EP-A1- 0 668 157
- EP-A1- 0 676 421
- EP-A2- 0 598 626
- EP-A2- 0 605 952
- WO-A-95/32242
- WO-A1-95/27005

## Beschreibung

Die vorliegende Erfindung betrifft ein Verfahren zur Herstellung von Folien und Schichten. Die vorliegende Erfindung betrifft weiter die Verwendung von Folien und Schichten erhältlich nach diesen Verfahren.

Aus EP-A 484 816 und EP-A 484 817 sind heißsiegelfähige Verpackungsfolien bekannt. Die beschriebenen Folien bestehen aus einer Polypropylenbasischicht und mindestens einer Deckschicht aus einem Propylenpolymeren, wobei die Basisschicht aus einem isotaktischen Polypropylen und die Deckschicht aus einem Copolymeren eines α-Olefins mit 2 bis 8 C-Atomen mit syndiotaktischem Propylen aufgebaut ist.

Aus EP-A 589 213 ist eine siegelbare Polypropylen-Mehrschichtfolie und ein Verfahren zu ihrer Herstellung sowie Verwendung bekannt. Die Mehrschichtfolie umfaßt mindestens eine Basisschicht, die überwiegend Polypropylen enthält, und mindestens eine Deckschicht. Die Deckschicht ist siegelfähig und enthält ein isotaktisches Homopolymerisat eines Olefins.

Aus Joachim Nentwig, Kunststoff-Folien: Herstellung, Eigenschaften Anwendungen, Carl Hanser Verlag, München, Wien, 1994 geht eine umfassende Darstellung des Standes der Technik der Kunststoff-Folien hervor.

WO 95/32242 beschreibt Folien und Schichten aus Propylen/α-Olefin-Copolymeren, welche mittels Metallocen-Katalysatoren hergestellt werden. EP-A 485 822 offenbart Olefinpolymere, die durch (Co)Polymerisation eines Olefins mit Hilfe von auf einem Indenyl-Gerüst basierenden Metallocen-Katalysatoren hergestellt werden. EP-A 496 260 beschreibt ein Verfahren aus Polypropylenzusammensetzungen Polypropylen-Schichten oder -Filme herzustellen

Die Aufgabe der vorliegenden Erfindung liegt demgegenüber darin, ein wirtschaftliches sowie umweltfreundliches Verfahren zur Herstellung von Folien und Schichten mit höherer Steifigkeit und Festigkeit sowie verbesserter Transparenz sowie hohem Glanz bereitzustellen.

Die der vorliegenden Erfindung zugrundeliegende Aufgabe wird gelöst durch ein Verfahren zur Herstellung von Folien und Schichten, wobei
(1) eine Polyolefinformmasse mit einer Komgröße von 20 µm bis 5000 µm verwendet wird,
(2) die Polyolefinformmasse mit mindestens einem Zuschlagsstoff schmelzgemischt und geformt wird,
(3) das Material bei einer Temperatur von 150 °C bis 300 °C aufgeschmolzen wird,
(4) das geschmolzene Material abgekühlt und dabei in die Form einer Zwischenschicht gebracht wird,
wobei die Polyolefinformmasse im wesentlichen isotaktisches hochmolekulares Polypropylen mit einer Molmasse von 100 000 bis 500 000 g/mol enthält, und das Polyolefin mittels Metallocen-Katalysatoren hergestellt ist.

Das Polyolefin kann bis zu 10 Gew.-%, bevorzugt bis zu 5 Gew.-% Ethylen oder eines zweiten Olefins mit oben genannter Bedeutung als Comonomer enthalten.

Die Polyolefinformmasse hat einen MFR (230/2,16) von 0,3 bis 260 g/10 min, beziehungsweise einen MFR (230/5) von 1 bis 750 g/10 min. Der MFR (230/2,16) ist bevorzugt 1 bis 150 und besonders bevorzugt 1,5 bis 50 g/10 min. Der MFR (230/5) ist bevorzugt 3 bis 450 und besonders bevorzugt 4,5 bis 150 g/10 min.

Die Molmasse beträgt 100000 bis 500000 g/mol, bevorzugt 110000 bis 400000 g/mol, besonders bevorzugt 120000 bis 340000 g/mol. Die Polydispersität M_{w}/Mₙ liegt bei 1,5 bis 10, bevorzugt bei 2 bis 5 und besonders bevorzugt bei < 3. Die Viskositätszahl liegt bei 100 bis 450 cm³/g, bevorzugt bei 110 bis 350 cm³/g, besonders bevorzugt bei 120 bis 300 cm³/g.

Der Schmelzpunkt liegt bei 120 bis 165 °C, bevorzugt bei 130 bis 162 °C, besonders bevorzugt bei 140 bis 160 °C. Der Gehalt an ataktischem Polyolefin (etherextrahierbarer Anteil) ist < 2 Gew.-% bevorzugt < 1 Gew.-%, besonders bevorzugt ist der Gehalt < 0,5 Gew.-%, ganz besonders bevorzugt enthält das Polymer < 0,3 Gew.-% ataktische Polymeranteile. Der Katalysatorrestgehalt beträgt bezüglich Chlor < 70 ppm, bevorzugt < 30 ppm, besonders bevorzugt < 20 ppm und bezogen auf Übergangsmetalle < 50 ppm, bevorzugt < 20 ppm, besonders bevorzugt < 10 ppm.

Das Polyolefin kann ein Mono- oder Copolymer sein. Ist das Polyolefin ein Copolymer, so ist das oder die Comonomer(en) bevorzugt isoliert eingebaut.

Ein Ethylen/Propylen-Copolymer beispielsweise weist somit z. B. folgenden idealisierten Aufbau auf:
....P-P-P-P-P-E-P-P-P-P-P-P-E....

Die im erfindungsgemäßen Verfahren eingesetzte Polyolefinformmasse enthält im wesentlichen isotaktische hochmolekulares Polypropylen. Die Metallocenkatalysatoren zur Herstellung solcher Polyolefine sind bekannt. Es handelt sich dabei bevorzugt um in bestimmter Weise am Indenylliganden substituierte Zirconocene, wie sie etwa in EP-A 576 970, EP-A 545 303, EP-A 549 900, EP-A 485 822 oder US-PS 4,278,284 beschrieben werden, auf die hiermit ausdrücklich Bezug genommen wird. Verwendet werden kann aber auch jeder andere Metallocenkatalysator, der in der Lage ist, ein Polyolefin, daher eine Polyolefinformmasse mit dem oben angegebenen Eigenschaftsprofil zu erzeugen.

Im Gegensatz dazu können die gängigen Katalysatoren auf TiCl₄-Basis nicht verwendet werden, da solche Katalysatoren nicht in der Lage sind, ein gewünscht einheitliches Polymer herzustellen. Unterschiedliche Typen von aktiven Zentren führen zu Ketten mit stark unterschiedlichem Aufbau. Die Bildung von ataktischen Polymeranteilen > 2 Gew.-% ist nicht zu vermeiden. Ein weitgehend isolierter Einbau von Comonomeren ist nicht realisierbar.

Homopolymere mit Schmelzpunkten < 160 °C sind mit TiCl₄-Katalysatoren nicht herstellbar. Die Polymerisationsaktivitäten solcher Katalysatoren liegen deutlich unter denen, die mit Metallocenkatalysatoren realisierbar sind.

Folien mit niedrigem Orientierungsgrad, hoher Festigkeit, Steifigkeit und Transparenz mit Dicken von 10 bis 200 µm, Glättwerksfolien mit vergleichbaren Eigenschaften und mit Dicken von 150 bis 1500 µm sowie Tafeln, die ebenso diese Eigenschaften aufweisen, mit Dicken von 1000 bis 20000 µm werden erhalten. Ebenso können Blasfolien im Dickenbereich von 2 bis 200 µm hergestellt werden, welche ebenfalls die bereits angeführten positiven Eigenschaften aufweisen. Das erfindungsgemäße Verfahren ermöglicht auch die Herstellung monoaxialorientierter Folienbahnen im Breitenbereich von 0,1 bis 3000 mm. Auch hier sind Festigkeit, Steifigkeit und Zähigkeit besonders gut.

Die Transparenzen vorstehend genannter Folien liegen > 85%, bevorzugt > 88% und besonders bevorzugt > 90%. Die erfindungsgemäß hergestellten Folien und Schichten weisen im Vergleich zu konventionellen Folien und Schichten deutlich bessere mechanische Materialeigenschaften, wie Festigkeit, Steifigkeit und Zähigkeit, auf.

Die hergestellten Folien und Schichten können auch als Schichten coextrudiert und kaschiert, in Dicken von 0,1 bis 50 µm auf anderen Materialien aufgebracht sein. Sie sind als Zwischenschicht ausgeführt.

Im erfindungsgemäßen Verfahren wird eine Polyolefinformmasse mit einer Korngröße von 20 µm bis 5000 µm verwendet oder hergestellt. Die geformte Polyolefinformmasse wird mit mindestens einem Zuschlagsstoff schmelzgemischt und geformt. Dieser Verfahrensschritt wird im Sinne der Erfindung als Compoundierung bezeichnet. Das schmelzgemischte und geformte Material wird bei einer Temperatur von 150 °C bis 300 °C aufgeschmolzen. Das geschmolzene Material wird abgekühlt und dabei in die Form Zwischenschicht gebracht.

Das geformte Material kann direkt bei einer Temperatur von 150 °C bis 300 °C aufgeschmolzen werden ohne vorher in der Compoundierung mit mindestens einem Zuschlagsstoff schmelzgemischt zu werden.

Die erhaltenen Folien und Schichten können im Sinne der Erfindung konfektioniert werden. Dabei werden die Folien und Schichten in eine handhabbare Form gebracht. Dazu wird das Material randbeschnitten zu Zuschnitten abgekantet oder als Rollenware aufgewickelt.

Die bevorzugt konfektinionierten Folien und Schichten können im Sinne der Erfindung zu Artikeln verarbeitet werden. Die Artikel finden in privaten Haushalten, im Pflege- und Gesundheitswesen sowie in Handel und Industrie Verwendung.

Das geformte oder in der Compoundierung schmelzgemischte Material kann homogenisiert und gewalzt und in die Verfahrensstufe der Formgebung eingesetzt werden. Dabei kann beim Homogenisieren dem Material mindestens ein Zuschlagsstoff zugesetzt werden.

In dem erfindungsgemäßen Verfahren können als Zuschlagsstoffe Nukleierungsmittel, Stabilisatoren, Antioxidantien, UV-Absorber, Lichtschutzmittel, Metalldesaktivatoren, Radikalfänger, Gleitmittel, Emulgatoren, Pigmente, anorganische und organische Farbstoffe, Ruß, Flammschutzmittel, Antistatika, chemische Treibmittel, Mineralien, geschnittene Glasfaser, Synthesefaser, wie Kohlenstoff- und Aramidfaser, physikalische Treibmittel wie Butan, Propan und höhere Kohlenwasserstoffe, Edelgase, Stickstoff, FCKW, Kohlendioxid oder Wasserdampf verwendet werden.

Das Material aus der Compoundierung kann getrocknet und homogenisiert und anschließend aufgeschmolzen und danach in eine Form gegeben werden.

Das aufgeschmolzene Material kann auf ein Substrat wie Metall, Holz, polymeres Material, Textilien aus Natur- oder Kunstfaser oder Papier aufgetragen werden.

Die Folien oder Schichten können in der weiteren Verarbeitung mono- oder biaxial orientiert werden.

Erfindungsgemäß ist die Verwendung einer Polyolefinformmasse mit mindestens einem Polyolefin zur Herstellung von Folien und Schichten vorgesehen.

Erfindungsgemäß ist weiter die Verwendung von Folien und Schichten zur Herstellung von Artikeln, wie Beutel, Verbundmaterialien und Laminaten vorgesehen.

Aufbauend auf diesem generell verbesserten Eigenschaftsbild vorstehend genannter Ausführungvarianten ergeben sich bevorzugte Anwendungen. Die erfindungsgemäßen Folien sind aufgrund der reduzierten Dicke besonders ökologisch, da Material gespart werden kann. Besonders steife Folien aus einem homogenen Material, welche nach dem Stand der Technik nur durch heterogene oder mehrschichtige Materialkombinationen herstellbar sind, ermöglichen aufgrund der Sortenreinheit ein umweltgerechtes Recycling. Beispielsweise können Randbeschnittte aus der Produktion und Schneidabfälle aus der Konfektionierung solcher Folien ökonomisch und ökologisch vorteilhaft wieder in den Produktionsprozeß zurückgeführt werden. Artikel aus diesen Materialien lassen sich vorteilhaft kleben oder schweißen (hohe Nahtfestigkeit), bedrucken (gute Haltbarkeit der Oberflächenaktivierung, wie z. B. durch eine Coronabehandlung, Fluorierung oder Ozonisierung), zeigen gute Barriereeigenschaften und haben ein besonders niedriges Rückstellvermögen, wie es in der Anwendung Dreheinschlagfolien für z. B. das Verpacken von Bonbons erforderlich ist. Schmale und stark längsorientierte Folienbahnen haben ein besonders niedriges Spleißverhalten.

Der niedrige Gehalt an Katalysatorrestbestandteilen, insbesondere Chlor- und Übergangsmetallgehalte, ermöglichen die Herstellung von Folien, Schichten, Platten und konfektionierte Materialien mit geringeren Neigung zur Gelbverfärbung.

Die niedrigen Gehalte an niedermolekularen oder ataktischen Bestandteilen in den Artikeln führen insbesondere bei der Anwendung in der Lebensmittelverpackung zu hervorragenden organoleptischen Eigenschaften.

Diese niedrigen Gehalte führen auch zur Verringerung der Dampf- und Kondensatbildung bei der Verarbeitung der Polyolefinformmasse. Das bedeutet eine Verbesserung der Arbeitshygiene, eine Erhöhung der Standzeiten der Werkzeuge aufgrund weniger Reinigungsperioden und eine Verbesserung der Lebensdauer der Produktionsmittel.

Die Erfindung wird anhand einer Zeichnung und von Beispielen näher erläutert.

### Zeichnung

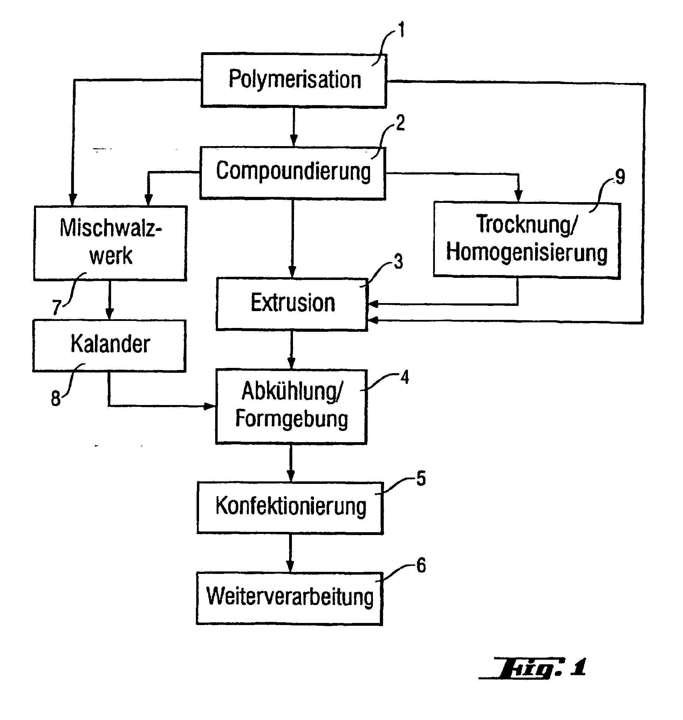

Die Zeichnung besteht aus Abbildung 1 und zeigt ein Fließschema des erfindungsgemäßen Verfahrens zur Herstellung von Folien und Schichten aus Propylenhomopolymerisat oder Propylencopolymerisat und zur Herstellung von Artikeln aus diesen Materialien..

In der Verfahrensstufe (1) wird eine Polymerisation durchgeführt, wie sie in den Beispielen 1 bis 14 näher beschrieben wird. In der Polymerisation wird ein Pulver mit einer Korngröße von 20 µm bis 5000 µm, bevorzugt von 50 µm bis 3500 µm, besonders bevorzugt von 200 µm bis 2000 µm hergestellt.

In der Verfahrensstufe (2) wird mit diesem Pulver eine Compoundierung durchgeführt. Die Compoundierung beinhaltet eine Schmelzmischung mit Zuschlagstoffen und Granulierung. Das zu verarbeitende Polymer kann als Pulver mit einem oder mehreren Zuschlagstoffen, wie Nukleierungsmittel, Stabilisatoren, Antioxidantien, UV-Absorber, Lichtschutzmittel, Metalldesaktivatoren, Radikalfänger, Gleitmittel, Emulgatoren, Pigmente, anorganische und organische Farbstoffe, Ruß Flammschutzmittel, Antistatika oder chemische Treibmittel vermischt werden.

Das zu verarbeitende Polymer kann weiter mit einem oder mehreren Zuschlagstoffen, wie Mineralien, geschnittener Glasfaser oder geschnittener Synthesefaser, wie z.B. Kohlenstoff- oder Aramidfaser vermischt werden. Das Polymer kann mit Zuschlagstoffen vorgemischt und anschließend in einem oder mehreren Extrudern aufgeschmolzen werden. Das Polymer kann auch direkt in einem oder mehreren Extrudern aufgeschmolzen und anschließend mit Zuschlagstoffen beaufschlagt und schmelzegemischt werden. Danach wird die Schmelze abgekühlt und geformt, insbesondere granuliert.

Das granulierte Material kann in der Verfahrensstufe (9) gegebenenfalls getrocknet und homogenisiert werden.

Das verarbeitungsfähige Material wird in der Verfahrensstufe (3) in einem oder mehreren Extrudern bei einer Temperatur von 150 °C bis 300 °C, bevorzugt von 170 °C bis 270 °C und besonders bevorzugt von 180 °C bis 230 °C aufgeschmolzen. Das Pulver kann auch direkt aus der Verfahrensstufe (1) in die Verfahrensstufe (3) eingesetzt werden. Bei allen diesen Ausführungsvarianten können im Extruder in der Verfahrensstufe (3) weitere der obengenannten Zuschlagstoffe zugeführt werden. Zusätzlich können unter den Verarbeitungsbedingungen als gasförmige Stoffe vorliegende physikalische Treibmittel in den Extruder eingeleitet werden. Physikalische Treibmittel sind z.B. Butan, Propan und höhere Kohlenwasserstoffe, Edelgase, Stickstoff, FCKW, Kohlendioxid oder Wasser. Bei dem erfindungsgemäßen Verfahren wird bevorzugt bei Verarbeitungstemperaturen aufgeschmolzen, die 0 °C bis 50 °C, bevorzugt 20 °C bis 40 °C unter den Verarbeitungstemperaturen der bekannten Materialien liegen. Als Extruder sind im Sinne der Erfindung alle im Stand der Technik bekannten Mischvorrichtungen zu verstehen; vgl. Handbuch der Kunststoff-Extrusionstechnik, Herausgeber F. Hensen, Carl Hanser Verlag 1986. In der Regel münden der oder die Extruder auf Werkzeuge wie Breitschlitz- oder Ringdüse.

Bei Mehrschichtfolien können die Schichten in den Werkzeugen selbst oder in vorgeschalteten Adaptern zusammengeführt werden. Mit den Werkzeugen kann das geschmolzene Material auch auf ein Substrat als Beschichtung aufgetragen werden. Substrat kann Metall, Holz, polymeres Material, Textilien aus Naturoder Kunstfaser, Papier und anderes Material sein.

Das geschmolzene Material wird in der Verfahrensstufe (4) abgekühlt und dabei in die Form einer Platte (Tafel), Folie, beispielsweise Flachfolie (Gieß- oder Glättwerksfolie) oder Schlauchfolie, z. B. Blasfolie, oder Beschichtung (Extrusionsbeschichtung, Kaschierung oder Laminierung) gebracht. Die Abkühlung und Formgebung kann auf einer oder mehreren hintereinandergeschalteten Kühlwalzen oder im Spalt eines Glättwerkes mit Luft oder Wasser erfolgen. Bei der Formgebung können die Kühlwalzen und Glättwerkzeuge die Schmelze mit der selben oder bis zur fünfzehnfachen Geschwindigkeit abziehen und transportieren wie sie aus den Werkzeugen extrudiert wird. Die Schmelze kann auch von einer ersten Kühlwalze mit der gleichen Geschwindigkeit, wie sie aus dem Werkzeug extrudiert wird, abgezogen und anschließend stufenweise mittels nachgeschalteter schneller laufender Walzen im abgekühlten Zustand längsorientiert und transportiert werden. Transportieren und Orientieren kann sowohl nach der Formgebung, wie auch mit abgekühltem und konfektioniertem Material erfolgen. Im Falle von Verbundmaterialien und Laminaten kann in einer weiteren Verfahrensstufe (6) nach Erwärmen bis unterhalb des Schmelzpunktes des Materials mit dem niedrigsten Schmelzpunkt mittels geeigneter Ziehvorrichtungen mono- oder biaxial orientiert werden.

Bei Material, das aus Ringdüsen extrudiert wird und die Abzugs- und Transportgeschwindigkeiten höher sind als die Extrusionsgeschwindigkeit, kann dieses Material sowohl mono- als auch simultan biaxial unter Verwendung von im Schlauch wirkenden Überdrucks in einer oder mehreren nacheinander geschalteten sich dabei aufblähenden Blasen orientiert werden.

Das abgekühlte Material wird in der Verfahrensstufe (6) konfektioniert. Dazu wird das Material, das als Flachfolie, Schlauchfolie, Laminat oder Platte, einschichtig, mehrschichtig oder als Beschichtung vorliegt, aufgewickelt oder zugeschnitten. Pulver aus der Verfahrensstufe (1) oder Polymer aus der Verfahrensstufe (2) können direkt in einem Mischwalzwerk (7), das einem Kalander (8) mit 2 oder mehr Walzen vorgeschaltet ist, plastifiziert und homogenisiert werden. Bei beiden Ausführungsvarianten können im Mischwalzwerk (7) vorstehend genannte Zuschlagsstoffe zugeführt werden. Abkühlung und Formgebung erfolgt im Kalander (8); vgl. Kopsch, Kalandertechnik, Carl Hanser Verlag, München 1978.

Das abgekühlte Material wird in der Verfahrensstufe (6) konfektioniert. Konfektioniertes Material, bevorzugt aufgewickeltes Material, kann in mehreren weiteren Verfahrensstufen (9) zu Artikeln verarbeitet werden. Dabei werden z.B. Beutel, Verbundmaterialien und Laminate erzeugt. Alle Artikel können bedruckt, lackiert, lasermarkiert, beschriftet und etikettiert werden.

### Beispiele

In den Beispielen und Vergleichsbeispielen werden die nachstehend in der Tabelle 1 erläuterten Abkürzungen verwendet.

**Tabelle 1**

| | |
|---|---|
| M_{w} | Molmassengewichtsmittel (g/mol), ermittelt durch Gelpermeationschromatographie |
| M_{w}/Mₙ | Polydispersität, ermittelt durch Gelpermeationschromatographie |
| II | Isotaktischer Index (¹³C-NMR-Spektroskopie) |
| nᵢₛₒ | Mittlere isotaktische Blocklänge (¹³C-NMR-Sp.) |
| n_{PE} | Mittlere Blocklänge Polyethylen (¹³C-NMR-Sp.) |
| VZ | Viskositätszahl gemessen bei 135°C, also 0,1 %ige Lösung in Decahydronaphthalin im Kapillarviskosimeter |
| Schmp. | Schmelzpunkt in °C (ermittelt mit DSC, 20 °C/min, Aufheiz/Abkühlgeschwindigkeit |
| Ethylengehalt | ¹³C-NMR-Spektroskopie |
| etherextrahierbare Anteile | Soxhlettextraktion mit siedendem Diethylether |
| MFR (230/2,16) | Schmelzindex bei 230°C, 2,16 kg Belastung (ISO 1133) in g/10 min bezw. dg/min |
| MFR (230/5) | Schmelzindex bei 230°C, 5 kg Belastung (ISO 1133) in g/10 min bezw. dg/min |

### I. Polymerisationen

Die Metallocenkatalysatoren wurden, wie in EP-A 0 576 970, EP-A 0 545 303, EP-A 0 549 900, EP-A 0 485 822 oder US 5,278,264 beschrieben, hergestellt. Die Polymerisationen sollen jedoch nur beispielhaften Charakter haben. Die erfindungsgemäße Polyolefinformmasse kann, solange sie der Definition ihrer Eigenschaften genügt, mit jedem geeigneten Metallocenkatalysatorsystem und jedem geeigneten Polymerisationsverfahren hergestellt werden.

### Beispiel 1

Ein trockener 150 dm³-Reaktor wurde mit Propylen gespült und bei 20°C mit 80 dm³ eines Benzinschnittes mit dem Siedebereich 100 bis 120°C befüllt. Nach Zugabe von 50 I flüssigem Propylen wurden 32 cm³ Methylaluminoxanlösung (Lösung in Toluol, entsprechend 90 mmol Al) zugegeben. Der Reaktorinhalt wurde auf 50°C gebracht und es wurde Wasserstoff zudosiert, bis im Gasraum des Reaktors ein Gehalt von 1,8 Vol.-% Wasserstoff erreicht war. 10,0 mg rac-Dimethylsilylbis(2-methyl-4-phenyl-1-indenyl)-zirkondichlorid wurden in 16 mol toluolischer Methylaluminoxanlösung (entsprechend 25 mmol Al) aufgelöst und in den Reaktor gegeben. Unter Konstanthaltung des Wasserstoffgehalts im Reaktor bei 1,8 ± 0,3 Vol.-% wurde bei 60°C 15 Stunden polymerisiert. Die Polymerisation wurde mit CO₂-Gas gestoppt und die Polymersuspension in einen nachgeschalteten Reaktor abgelassen. Das Suspensionsmedium wurde durch Wasserdampfdestillation vom Polymerpulver abgetrennt, und die wäßrige Polymersuspension über eine Druckfilternutsche vom Wasser getrennt. Bei 80°C und 100 mbar wurde das Pulver 24 Stunden getrocknet. Die Ausbeute betrug 19,5 kg. Am Pulver wurden folgende Daten gemessen:
MFR (230/2,16) = 6 g/10 min; VZ = 234 cm³/g; M_{w} = 315500 g/mol; M_{w}/Mₙ = 2.3; Schmelzpunkt 157°C; II = 98,4 %; nᵢₛₒ = 125; 0,2 Gew.-% etherextrahierbarer Anteil.

### Beispiel 2

Es wurde verfahren wie in Beispiel 1, die Wasserstoffmenge die verwendet wurde betrug jedoch 2,4 ± 0,4 Vol.-%. Die Ausbeute betrug 20,4 kg.
Am Pulver wurden folgende Daten gemessen:
MFR (230/2,16) = 19 g/10 min; VZ = 159 cm³/g; M_{w} = 144500 g/mol; M_{w}/Mₙ = 2,1; Schmelzpunkt 158°C; II = 98,9 %; nᵢₛₒ = 150; 0,3 Gew.-% etherextrahierbarer Anteil.

### Beispiel 3

Es wurde verfahren wie in Beispiel 2, als Metallocen wurde jedoch rac-Dimethylsilylbis(2-methyl-4-naphthyl-1-indenyl)zirkondichlorid verwendet und die Wasserstoffmenge betrug 3,0 ± 0,5 Vol.-%. Die Ausbeute betrug 20,5 kg.
Am Pulver wurden folgende Daten gemessen:
MFR (230/2,16) = 31 g/10 min; VZ = 132 cm³/g; M_{w} = 130000 g/mol; M_{w}/Mₙ = 2,0; Schmelzpunkt 160°C; II = 99,2 %; nᵢₛₒ = 150; 0,3 Gew.-% etherextrahierbarer Anteil.

### Beispiel 4

Es wurde verfahren wie in Beispiel 1, als Metallocen wurde jedoch rac-Dimethylsilylbis(2-methyl-4-phenanthryl-1-indenyl)zirkondichlorid verwendet, die Wasserstoffmenge betrug 3,5 ± 0,3 Vol.-%. Die Ausbeute betrug 18,5 kg.
Am Pulver wurden folgende Daten gemessen:
MFR (230/2,16) = 55 g/10 min; VZ = 124 cm³/g; M_{w} = 125000 g/mol; M_{w}/Mₙ = 2,7; Schmelzpunkt 159°C; II = 99,0 %; nᵢₛₒ = ca. 140; 0,3 Gew.-% etherextrahierbarer Anteil.

### Beispiel 5

Es wurde verfahren wie in Beispiel 1, als Metallocen wurde jedoch rac-Dimethylsilylbis(2-ethyl-4,5-benzo-1-indenyl)zirkondichlorid verwendet, und die Wasserstoffmenge betrug 1,0 ± 0,2 Vol.-%. Die Ausbeute betrug 17,5 kg.
Am Pulver wurden folgende Daten gemessen:
MFR (230/2,16) = 3,5 g/10 min; VZ = 275 cm³/g; M_{w} = 331500 g/mol; M_{w}/Mₙ = 2,2; Schmelzpunkt 146°C; II = 95,2 %; nᵢₛₒ = 48; 0,2 Gew.-% etherextrahierbarer ataktischer Anteil.

### Beispiel 6

Es wurde verfahren wie in Beispiel 1, als Metallocen wurde jedoch rac-Dimethylsilylbis(2-methyl-1-indenyl)zirkondichlorid in einer Menge von 15 mg verwendet und die Wasserstoffmenge war 0,7 ± 0,2 Vol.-%. Die Ausbeute betrug 20,4 kg. Am Pulver wurden folgende Daten gemessen:
MFR (230/2,16) = 23 g/10 min; VZ = 161 cm³/g; M_{w} = 139500 g/mol; M_{w}/Mₙ = 2,1; Schmelzpunkt 150°C; II = 97,1 %; nᵢₛₒ = 62; 0,3 Gew.-% etherextrahierbarer ataktischer Anteil.

### Beispiel 7

Es wurde verfahren wie in Beispiel 6, die Wasserstoffmenge war jedoch 1,2 ± 0,2 Vol.-%. Die Ausbeute betrug 21,1 kg.
Am Pulver wurden folgende Daten gemessen:
MFR (230/2,16) = 34 g/10 min; VZ = 136 cm³/g; M_{w} = 132500 g/mol; M_{w}/Mₙ = 2,7; Schmelzpunkt 148°C; II = 96,5 %; nᵢₛₒ = 56; 0,3 Gew.-% etherextrahierbarer Anteil.

### Beispiel 8

Analog zu EP-A 0 576 970, Beispiel 28, wurde rac-Dimethylsilylbis(2-methyl-4-naphthyl-1-indenyl)zirkondichlorid auf "F-MAO auf SiO₂" geträgert.
Analog zu Beispiel 1 wurde die Polymerisation mit 30 g des Trägerkatalysators suspendiert in 250 ml eines entaromatisierten Benzinschnittes mit dem Siedebereich 100 bis 120°C durchgeführt. Die verwendete Wasserstoffmenge war 4,0 ± 0,3 Vol.-% und die Polymerisationstemperatur betrug 75°C. Die Ausbeute betrug 20,7 kg. Am Pulver wurden folgende Daten gemessen:
MFR (230/2,16) = 49 g/10 min; VZ = 141 cm³/g; M_{w} = 136500 g/mol; M_{w}/Mₙ = 2,8; Schmelzpunkt 151°C; II = 97,3 %; nᵢₛₒ = 70; 0,25 Gew.-% etherextrahierbarer ataktischer Anteil.

### Beispiel 9

Beispiel 1 wurde wiederholt, als Wasserstoffmenge wurden 0,2 ± 0,1 Vol.-% eingestellt und während der 15 stündigen Polymerisationszeit wurden 500 g Ethylen zu dosiert. Die Ausbeute betrug 20,5 kg.
Am Pulver wurden folgende Daten gemessen:
1,9 Gew.-% Ethylengehalt, n_{PE} < 1,3 (d.h., die überwiegende Mehrzahl der Ethyleneinheiten wurden isoliert eingebaut);
MFR (230/2,16) = 5,4 g/10 min; VZ = 239 cm³/g; M_{w} = 223500 g/mol; M_{w}/Mₙ = 2,5; Schmelzpunkt 133°C; 0,3 Gew.-% etherextrahierbarer ataktischer Anteil.

### Beispiel 10

Beispiel 9 wurde mit 350 g Ethylen und einer Wasserstoffmenge von
0,6 ± 0,2 Vol.-% wiederholt. Die Ausbeute betrug 18,7 kg.
Am Pulver wurden folgende Daten gemessen:
1,3 Gew.-% Ethylengehalt, n_{PE} = 1,2; MFR (230/2,16) = 9,5 g/10 min; VZ = 186 cm³/g; M_{w} = 168000 g/mol; M_{w}/Mₙ = 2,6; Schmelzpunkt 137°C; 0,4 Gew.-% etherextrahierbarer ataktischer Anteil.

### Beispiel 11

Beispiel 10 wurde mit 500 g 1-Hexen wiederholt. Die Ausbeute betrug 17,3 kg. Am Pulver wurden folgende Daten gemessen:
1,2 Gew.-% Hexengehalt; n_{Hexen} = 1,0; MFR (230/2,16) = 18 g/10 min; VZ = 159 cm³/g; M_{w} = 148500 g/mol; M_{w}/Mₙ = 2,3; Schmelzpunkt 141°C; 0,3 Gew.-% etherextrahierbarer ataktischer Anteil.

### Beispiel 12

Beispiel 10 wurde mit 1,2 ± 0,3 Vol.-% Wasserstoffmenge wiederholt. Die Ausbeute betrug 19,3 kg. Am Pulver wurden folgende Daten gemessen:
1,4 Gew.-% Ethylengehalt; n_{PE} = 1,2; MFR (230/2,16) = 29 g/10 min; VZ = 142 cm³/g; M_{w} = 135000 g/mol; M_{w}/Mₙ = 2,5; Schmelzpunkt 136°C; 0,5 Gew.-% etherextrahierbarer ataktischer Anteil.

### Beispiel 13

Beispiel 5 wurde mit dem Metallocen rac-Dimethylsilylbis(2-methyl-4,6-diisopropyl-1-indenyl)zirkondichlorid und einer Wasserstoffmenge von
0,7 ± 0,1 Vol.-% wiederholt. Die Ausbeute betrug 18,4 kg.
Am Pulver wurden folgende Daten gemessen:
MFR (230/2,16) = 10,5 g/10 min; VZ = 205 cm³/g; M_{w} = 194500 g/mol; M_{w}/Mₙ = 2,1; Schmelzpunkt 147°C; II = 96,7 %; nᵢₛₒ = 63; 0,3 Gew.-% etherextrahierbarer ataktischer Anteil.

### Beispiel 14

Beispiel 1 wurde mit 2,1 ± 0,2 Vol.-% Wasserstoffmenge wiederholt. Die Ausbeute betrug 22,7 kg.
Am Pulver wurden folgende Daten gemessen:
MFR (230/2,16) = 9,5 g/10 min; VZ = 215 cm³/g; M_{w} = 201500 g/mol; M_{w}/Mₙ = 2,3; Schmelzpunkt 158°C; II = 98,7 %; nᵢₛₒ = 135; 0,2 Gew.-% etherextrahierbarer ataktischer Anteil.

Aus der nachstehend aufgeführten Tabelle 2 geht eine Vergleich der Beispiele 1 bis 14 im Hinblick auf die Polymerisation und auf die gemessenen Daten der hergestellten Polymere hervor.

**Tabelle 2**

| | B1 | B2 | B3 | B4 | B5 | B6 | B7 |
|---|---|---|---|---|---|---|---|
| Propylen [I] | 50 | 50 | 50 | 50 | 50 | 50 | 50 |
| H₂ [Vol.-%] | 1,8±,3 | 2,4±,4 | 3,0±,5 | 3,5±,3 | 1,0±,2 | 0,7±,2 | 1,2±,2 |
| Zeit [h]¹⁾ | 15 | 15 | 15 | 15 | 15 | 15 | 15 |
| T [°C]²⁾ | 60 | 60 | 60 | 60 | 60 | 60 | 60 |
| Ausb. [kg] | 19,5 | 20,4 | 18,4 | 18,5 | 17,5 | 20,4 | 21,1 |
| M_{w} [g/mol] | 315500 | 144500 | 130000 | 125000 | 331500 | 139500 | 132500 |
| M_{w}/Mₙ | 2,3 | 2,1 | 2,0 | 2,7 | 2,2 | 2,1 | 2,7 |
| II [%] | 98,4 | 98,9 | 99,2 | 99,0 | 95,2 | 97,1 | 96,5 |
| nᵢₛₒ | 125 | 150 | 150 | 140 | 48 | 62 | 56 |
| n_{PE} | - | - | - | - | - | - | - |
| VZ [cm³/g] | 234 | 159 | 132 | 124 | 275 | 161 | 136 |
| Smp. [°C] | 157 | 158 | 160 | 159 | 146 | 150 | 148 |
| extr. Ant.³⁾ | 0,2 | 0,3 | 0,3 | 0,3 | 0,2 | 0,3 | 0,3 |
| MFR [dg/min] | 6 | 19 | 31 | 55 | 3,5 | 23 | 34 |

| | B8 | B9 | B10 | B11 | B12 | B13 | B14 |
|---|---|---|---|---|---|---|---|
| Propylen [I] | 50 | 50 | 50 | 50 | 50 | 50 | 50 |
| Ethylen [g] | | 500 | 350 | | 350 | | |
| 1-Hexen [g] | | | | 500 | | | |
| H₂ [Vol.-%] | 4,0±,3 | 0,2±,1 | 0,6±,2 | 3,5±,3 | 1,2±,3 | 0,7±,1 | 2,1±,2 |
| Zeit [h]¹⁾ | 15 | 15 | 15 | 15 | 15 | 15 | 15 |
| T [°C]²⁾ | 75 | 60 | 60 | 60 | 60 | 60 | 60 |
| Ausb. [kg] | 20,7 | 20,5 | 18,7 | 17,3 | 19,3 | 18,4 | 22,7 |
| M_{w} [g/mol] | 136500 | 223500 | 168000 | 148500 | 135000 | 194500 | 201500 |
| M_{w}/Mₙ | 2,8 | 2,5 | 2,6 | 2,3 | 2,5 | 2,1 | 2,3 |
| II [%] | 97,3 | - | - | - | - | 96,7 | 98,7 |
| nᵢₛₒ | 70 | - | - | - | - | 63 | 135 |
| n_{PE} | - | 1,3 | 1,2 | - | 1,2 | - | - |
| VZ [cm³/g] | 141 | 239 | 186 | 159 | 142 | 205 | 215 |
| Smp. [°C] | 151 | 133 | 137 | 141 | 136 | 147 | 158 |
| extr. Ant.³⁾ | 0,25 | 0,3 | 0,4 | 0,3 | 0,5 | 0,3 | 0,2 |
| MFR [dg/min] | 49 | 5,4 | 9,5 | 18 | 29 | 10,5 | 9,5 |

| | | | | | | | |
|---|---|---|---|---|---|---|---|
| ¹⁾ Polymerisationszeit ²⁾ Polymerisationstemperatur ³⁾ extrahierbarer Anteil in Gew.-% | | | | | | | |

### II. Verarbeitung

### Beispiel 15

100 Teile Polymerpulver gemäß Beispiel 6 wurden mit 0,05 Teilen Irganox 1010, 0,05 Teilen Calciumstearat, 0,05 Teilen Hostanox PAR 24 gemischt, auf einem IDE 60 mm Einschneckenextruder compoundiert und anschließend in einem Granulator granuliert. Das Granulat wurde zu einer Flachfolie mit einer Breite von 700 mm und einer Dicke von 85 µm bei einer Massetemperatur von 200°C auf eine Einschneckenflachfolienanlage (Durchmesser 70 mm) mit Breitschlitzdüse extrudiert, auf einer Kühlwalze mit 28°C abgekühlt und nach Randbeschnitt aufgewickelt.

### Vergleichsbeispiel 151

Mit einem nichterfindungsgemäßen Material Hostalen PPU 1780 F1 wurde unter den in Beispiel 15 genannten Bedingungen eine vergleichbare Flachfolie hergestellt.

Die Folien aus Beispiel 15 und Vergleichsbeispiel 151 wurden mittels der in Tabelle 3 aufgeführten Prüfverfahren untersucht und verglichen. Dabei wurde ein Zugversuch an Folien nach DIN 53455 durchgeführt.

**Tabelle 3**

| Prüfverfahren | Beispiel 15 | VG 151 |
|---|---|---|
| Reißfestigkeit* [MPa] | 31,4 | 26 |
| Reißdehnung* [%] | 720 | 700 |
| Zug-E-Modul* [MPa] | 1350 | 1120 |
| MFR (230/2,16) an Folien [g/10 min] | 26,6 | 24,0 |
| Durchreißwiderstand [mN/Lage Folie] | 1140 | 1010 |

| | | |
|---|---|---|
| * In der Tabelle sind die Werte für die Längsmessung angegeben. | | |

### Beispiel 16

Die Granulatherstellung des Beispiels 16 wurde wie im Beispiel 15 durchgeführt. Als Polymerpulver wurde das Produkt aus Beispiel 7 verwendet. Aus dem Granulat wurde eine Flachfolie mit einer Breite von 1250 mm und einer Dicke von 100 µm bei einer Massetemperatur von 240°C hergestellt. Die Folie wurde auf einer glatten Kühlwalze bei 18°C abgeschreckt und nach Randbeschnitt aufgewickelt. Dabei wurde eine A-B-A Coextrusionsfolie hergestellt. Die A-Schichten der Folie wurden mittels eines Satelitenextruders mit einem Durchmesser von 70 mm extrudiert. Die B-Schicht wurde mittels eines Hauptextruders mit einem Durchmesser von 105 mm extrudiert. Die Schichten A, B und A wurden vor der Breitschlitzdüse in einem Adapter mit einem Schichtstärkenverhältnis von 1 : 8 : 1 zusammengeführt. Die Schicht A wurde aus Polymerpulver gemäß Beispiel 7 nach dem Verfahren gemäß Beispiel 15 hergestellt. Die Schicht B wurde aus Hostalen PPT 1770 F2 nach dem Verfahren gemäß Beispiel 15 hergestellt.

### Vergleichbeispiel 161

Vergleichsbeispiel 161 wurde wie Beispiel 16 durchgeführt, wobei die Schicht A aus Hostalen PPU 1780 F1 nach dem Verfahren gemäß Beispiel 15 hergestellt wurde.

### Vergleichbeispiel 162

Vergleichsbeispiel 162 wurde wie Beispiel 16 durchgeführt, wobei die Schicht A aus Hostalen PPT 1770 F2 nach dem Verfahren gemäß Beispiel 15 hergestellt wurde.

### Vergleichbeispiel 163

Vergleichsbeispiel 163 wurde in Anlehnung an Beispiel 16 durchgeführt, wobei eine Monofolie aus Hostalen PPT 1770 F2 nach dem Verfahren gemäß Beispiel 15 hergestellt wurde.

Die Folien aus Beispiel 16 und den Vergleichsbeispielen 161, 162 und 163 wurden mittels der in Tabelle 4 aufgeführten Prüfverfahren untersucht und verglichen. Dabei wurde ein Zugversuch an Folien nach DIN 53455 durchgeführt.

**Tabelle 4**

| Prüfverfahren | Beispiel 16 | VG 161 | VG 162 | VG 163 |
|---|---|---|---|---|
| Reißfestigkeit* [Mpa] | 32 | 29 | 28 | 28 |
| Reißdehnung* [%] | 620 | 570 | 530 | 600 |
| Zug-E-Modul* [Mpa] | 785 | 720 | - | - |
| Totale Transmission [%]^{#} | 94 | 90 | - | 80 |
| Durchreißwiderstand [mN/Lage Folie] | 2370 | 2080 | 1850 | 1950 |

| | | | | |
|---|---|---|---|---|
| * In der Tabelle sind die Werte für die Längsmessung angegeben. ^{#} Die Messung wurde vergleichbar zu ASTM D 1003 ausgeführt. | | | | |

### Beispiel 17

100 Teile Polymerpulver wurden gemäß Beispiel 10 mit 0,05 Teilen Irganox 1010, 0,17 Teilen Kieselsäure, 0,17 Teilen Erucasäureamid 0,1 Teilen Hostanox PAR 24 und 0,03 Teilen Calciumcarbonat gemischt, auf einem IDE 60 mm Einschneckenextruder compoundiert und anschließend in einem Granulator granuliert. Das Granulat wurde zu einer Flachfolie mit einer Breite von 180 mm und einer Dicke von 80 µm bei einer Massetemperatur von 230°C auf eine Coextrusionsanlage (Durchmesser 30 mm) umgesetzt, die als Monoschichtextrusionsanlage betrieben wurde, mit Breitschlitzdüse extrudiert, auf einer glatten Kühlwalze auf 28°C abgekühlt und nach Randbeschnitt abgewickelt.

### Vergleichsbeispiel 171

Vergleichsbeispiel 171 wurde wie Beispiel 17 durchgeführt, wobei jedoch 100 Teile eines nicht erfindungsgemäßen Polymerpulvers mit einem C2-Gehalt von 4 % mit den übrigen Bestandteilen gemischt wurden (das Polymer wurde mit einem Ti-Katalysator hergestellt und enthielt 3,7 Gew.-% ataktisches Polypropylen).

Die Folien aus Beispiel 17 und Vergleichsbeispiel 171 wurden mittels der in Tabelle 5 aufgeführten Prüfverfahren untersucht und verglichen. Dabei wurden ein Zugversuch an Folien nach DIN 53455, eine Glanzmessung unter einem Winkel von 20° nach DIN 67530 und eine Messung von Transparenz und Trübung nach ASTM D 1003 durchgeführt.

**Tabelle 5**

| Prüfverfahren | Beispiel 17 | Vergleichsbeispiel 171 |
|---|---|---|
| Streckspannung* [MPa] | 17,6 | 15,8 |
| Reißfestigkeit* [Mpa] | 29 | 27 |
| Reißdehnung* [%] | 630 | 590 |
| Zug-E-Modul* [Mpa] | 540 | 500 |
| Glanz, 20° | 172 | 140 |
| Transparenz [%] | 93 | 90 |
| Trübung [%] | 7 | 10 |
| MFR (230/2,16) an Folien [g/10 min] | 11 | 9 |
| Durchreißwiderstand [mN/Lage Folie] | 1240 | 1100 |

| | | |
|---|---|---|
| * In der Tabelle sind die Werte für die Längsmessung angegeben, quer wurden vergleichbare Werte gemessen. | | |

### Beispiel 18

Jeweils 100 Teile Polymerpulver gemäß den Beispielen 10 beziehungsweise 1 wurden mit 0,05 Teilen Irganox 1010, 0,17 Teilen Kieselsäure, 0,17 Teilen Erucasäureamid 0,1 Teilen Hostanox PAR 24 und 0,03 Teilen Calciumcarbonat gemischt, auf einem IDE 60 mm Einschneckenextruder compoundiert und anschließend in einem Granulator granuliert. Das Granulat wurde zu einer A-B-Coextrusionsfolie mit einer Breite von 180 mm und einer Dicke von 80 µm bei einer Massetemperatur von 230°C auf eine Coextrusionsanlage (Durchmesser 30 mm) umgesetzt. Die A-Schicht der Folie wurde mittels eines Satelitenextruders mit einem Durchmesser von 25 mm extrudiert. Die B-Schicht wurde mittels eines Hauptextruders mit einem Durchmesser von 30 mm extrudiert. Die Schichten A und B wurden in einer Coextrusionsdüse mit einem Schichtstärkenverhältnis von 1 zu 9 zusammengeführt. Die Schicht A wurde aus Polymerpulver gemäß Beispiel 10 nach dem Verfahren gemäß Beispiel 17 hergestellt. Die Schicht B wurde aus Polymerpulver gemäß Beispiel 1 nach dem Verfahren gemäß Beispiel 17 hergestellt.

### Vergleichsbeispiel 181

Das Vergleichsbeispiel 181 wurde wie Beispiel 18 durchgeführt, wobei die Schichten A und B hergestellt wurden, indem ein Polymerpulver eines Homopolypropylens mit den übrigen Bestandteilen gemischt wurde.

Die Folien aus Beispiel 18 und Vergleichsbeispiel 181 wurden mittels der in Tabelle 6 aufgeführten Prüfverfahren untersucht und verglichen. Dabei wurden ein Zugversuch an Folien nach DIN 53455 und eine Glanzmessung unter einem Winkel von 20° durchgeführt.

**Tabelle 6**

| Prüfverfahren | Beispiel 18 | Vergleichsbeispiel 181 |
|---|---|---|
| Streckspannung* [MPa] | 18,1 | 18,1 |
| Reißfestigkeit* [Mpa] | 30,6 | 27,1 |
| Reißdehnung* [%] | 630 | 507 |
| Zug-E-Modul* [Mpa] | 690 | 600 |
| Glanz, 20° | 168 | 117 |

| | | |
|---|---|---|
| * In der Tabelle sind die Werte für die Längsmessung angegeben. | | |

### Beispiel 19

Tabelle 7 aufgeführten Prüfverfahren untersucht und verglichen. Dabei wurden ein Zugversuch an Folien nach DIN 53455 und eine Glanzmessung unter einem Winkel von 20° durchgeführt.

**Tabelle 7**

| Prüfverfahren | Beispiel 19 | Vergleichsbeispiel 181 |
|---|---|---|
| Streckspannung* [MPa] | 18.9 | 30,6 |
| Reißfestigkeit* [Mpa] | 28.1 | 27,1 |
| Reißdehnung* [%] | 630 | 507 |
| Zug-E-Modul* [Mpa] | 620 | 600 |
| Glanz, 20° | 148 | 117 |

| | | |
|---|---|---|
| * In der Tabelle sind die Werte für die Längsmessung angegeben. | | |

### Beispiel 20

Beispiel 17 wurde wiederholt, als Polymerpulver wurde jedoch ein Material gemäß Beispiel 14 verwendet.
Die zu Beispiel 17 analogen Untersuchungen der Folie sind in Tabelle 8 zusammengefaßt.

### Beispiele 21 - 24

Beispiel 17 wurde wiederholt, als Polymerpulver wurden jedoch die Materialien gemäß Beispiel 9 (Beispiel 21), Beispiel 13 (Beispiel 22), Beispiel 11 (Beispiel 23) beziehungsweise Beispiel 12 (Beispiel 24) verwendet.

Die zu Beispiel 17 analogen Untersuchungen der Folien sind in Tabelle 8 zusammengefaßt.

**Tabelle 8**

| Prüfverfahren | Bsp. 20 | Bsp. 21 | Bsp. 22 | Bsp. 23 | Bsp. 24 | Bsp. 25 |
|---|---|---|---|---|---|---|
| Streckspannung [MPa] | 19,9 | 15,9 | 18,0 | 17,0 | 16,9 | 18,5 |
| Reißfestigkeit [Mpa] | 37,5 | 29,0 | 31,9 | 30,1 | 29,5 | 33 |
| Reißdehnung | 600 | 700 | 600 | 730 | 740 | 820 |
| Zug-E-Modul | 670 | 510 | 630 | 540 | 535 | 600 |
| Glanz, 20° | 158 | 180 | 154 | 170 | 178 | 150 |
| Transparenz [%] | 92 | 95 | 93 | 94 | 94 | 93 |
| Trübung [%] | 8 | 5 | 7 | 6 | 6 | 7 |
| MFR (230/2,16) an Folien [g/10 min] | 10,3 | 5,6 | 10,0 | 19 | 31 | 50 |

### Beispiel 25

Beispiel 17 wurde wiederholt, als Polymerpulver wurde jedoch ein Material gemäß Beispiel 8 verwendet. Die zu Beispiel 17 analogen Untersuchungen der Folie sind in Tabelle 8 zusammengefaßt.

### Beispiele 26 - 30

Beispiel 15 wurde wiederholt, als Polymerpulver wurde jedoch das Material gemäß Beispiel 1 (Beispiel 26), Beispiel 2 (Beispiel 27), Beispiel 3 (Beispiel 28), Beispiel 4 (Beispiel 29) beziehungsweise Beispiel 5 (Beispiel 30) verwendet. Die zu Beispiel 17 analogen Untersuchungen der Folien sind in Tabelle 9 zusammengefaßt.

**Tabelle 9**

| Prüfverfahren | Bsp. 26 | Bsp. 27 | Bsp. 28 | Bsp. 29 | Bsp. 30 |
|---|---|---|---|---|---|
| Reißfestigkeit [Mpa] | 36,7 | 38,1 | 40,3 | 43,5 | 29,8 |
| Reißdehnung [%] | 710 | 720 | 800 | 930 | 715 |
| Zug-E-Modul [MPa] | 1480 | 1500 | 1560 | 1600 | 1300 |
| MFR (230/2,16) an Folien [g/10 min] | 6,3 | 20 | 20 | 57 | 3,0 |

### Beispiel 31 und 32

100 Teile Polymerpulver gemäß Beispiel 1 (Beispiel 31) werden mit 0,05 Teilen Irganox 1010, 0,1 Teilen Hostanox PAR24, 0,03 Teilen Calciumkarbonat und 0,05 Teilen Natriumbenzoat gemischt, auf einen IDE 60 mm Einschneckenextruder compoundiert und anschließend in einem Granulator granuliert. Das Granulat wurde zu einer Flachfolie mit einer Breite von 300 mm und einer Dicke von 1200 µm bei einer Massetemperatur von 230°C auf eine Einschneckenflachfolienanlage (Durchmesser 60 mm) mit Tafeldüse extrudiert. Die Folie wird auf einer Walze im Wasserbad abgekühlt. Die erkaltete Folie wird in einer weiteren Stufe zunächst längs und dann quer gereckt (Reckfaktor längs 6 und quer 8). Die mittelere Recktemperatur betrug 153°C. In gleicher Weise wurde mit Polymer entsprechend Beispiel 5 (Beispiel 32) und mit Vergleichsmaterial Hostalen PPR 1060 F3 (Vergleichsbeispiel 311) verfahren. Die Folien wurden mittels den in Tabelle 10 aufgeführten Prüfverfahren untersucht. Dabei wurde ein Zugversuch an Folien nach DIN 53455 durchgeführt.

**Tabelle 10**

| Prüfverfahren | Beispiel 31 | Beispiel 32 | Vergleichsbeispiel 311 |
|---|---|---|---|
| MFR (230/2,16) an Folie [g/10 min] | 5,8 | 3,4 | 3,5 |
| Zug-E-Modul längs [MPa] | 3200 | 2930 | 2400 |
| Zug-E-Modul quer [MPa] | 6070 | 5130 | 3860 |

### Beispiel 33 und Vergleichsbeispiel 331

Es wird vorgegangen wie in Beispiel 15, das dort hergestellte Granulat wird mit 1,5 Gew.-% Hydrocerol HP40P (Treibmittel, bestehend aus einem Polymerblend und Zitronensäure mit einer Zersetzungstemperatur bei 160 °C) gemischt und zu einer mittels diesen Schaumbildners gebilldeten Schaumfolie mit einer Breite von 700 mm und einer Dicke von 130 µm bei einer Massetemperatur von 190°C auf eine Einschneckenflachfolienanlage (Durchmesser 70 mm) mit Breitschlitzdüse extrudiert, auf einer Kühlwalze mit 40°C abgekühlt und nach Randbeschnitt aufgewickelt.

Mit einem nichterfindungsgemäßen Material Hostalen PPU1780F1 wurde in gleicher Weise eine vergleichbare Schaumfolie hergestellt.
Tabelle 11 enthält die Ergebnisse der Ausprüfungen an diesen Folien.

**Tabelle 11**

| Prüfverfahren | Beispiel 33 | Vergleichsbeispiel 331 |
|---|---|---|
| Foliendicke [µm] | 130 | 135 |
| Dichte [g/cm³] der | 0,68 | 0,68 |
| Schaumfolie | | |
| Streckspannung [MPa] längs | 13,3 | 10,5 |
| quer | 7,8 | 7,0 |
| Dehnung bei Strecksp. [MPa] längs | 5 | 5 |
| quer | 2 | 2 |
| Reißfestigkeit [MPa] längs | 14 | 10,3 |
| quer | 8 | 7,3 |
| Reißdehnung [%] längs | 445 | 440 |
| quer | 21 | 30 |
| Zug-E-Modul [MPa] längs | 460 | 410 |
| quer | 250 | 200 |

## Patentansprüche

1. Verfahren zur Herstellung von Folien und Schichten, wobei
(1) eine Polyolefinformmasse mit einer Korngröße von 20 µm bis 5000 µm verwendet wird,
(2) die Polyolefinformmasse mit mindestens einem Zuschlagsstoff schmelzgemischt und geformt wird,
(3) das Material bei einer Temperatur von 150 °C bis 300 °C aufgeschmolzen wird,
(4) das geschmolzene Material abgekühlt und dabei in die Form einer Zwischenschicht gebracht wird,
wobei die Polyolefinformmasse im wesentlichen isotaktisches hochmolekulares Polypropylen mit einer Molmasse von 100 000 bis 500 000 g/mol enthält, und das Polyolefin mittels Metallocen-Katalysatoren hergestellt ist.

2. Verfahren nach Anspruch 1, wobei die Polyolefinformmasse mindestens ein Polypropylen mit bis zu 10 Gew.-% Ethylen oder eines zweiten Olefins als Comonomer enthält.

3. Verfahren nach einem oder mehreren der Ansprüche 1 bis 2, wobei die Polyolefinformmasse einen MFR (230/2,16) von 0,3 bis 260 g/10 min aufweist.

4. Verfahren nach den Ansprüchen 1 bis 3, wobei in einer Verfahrensstufe (5) die Folie oder Schicht konfektioniert wird.

5. Verfahren nach Anspruch 5, wobei in einer Verfahrensstufe (6) das Material aus den Verfahrensstufen (4) oder (5) zu Artikeln verarbeitet wird.

6. Verfahren nach einem oder mehreren der Ansprüche 1 bis 5, wobei das Material aus der Verfahrensstufe (1) oder (2) in einer Verfahrensstufe (7) homogenisiert und in einer Verfahrensstufe (8) gewalzt wird und das Material anschließend in die Verfahrensstufe (4) eingesetzt wird.

7. Verfahren nach einem oder mehreren der Ansprüche 1 bis 6, wobei mindestens ein Material gemäß der Verfahrensstufe (3) auf ein Substrat wie Metall, Holz, polymeres Material, Textilien aus Natur- oder Kunstfaser oder Papier aufgetragen wird.

8. Verfahren nach einem oder mehreren der Ansprüche 5 bis 7, wobei das Material in der Verfahrensstufe (6) mono- oder biaxial orientiert wird.

9. Verwendung von Folien und Schichten erhältlich nach einem Verfahren nach einem oder mehreren der Ansprüche 1 bis 8 zur Herstellung von Artikeln.

## Claims

1. A method for producing films and sheets, wherein
(1) a polyolefin moulding composition with a grain size of 20 µm to 5000 µm is used,
(2) the polyolefin moulding composition is melt-mixed with at least one additive and shaped,
(3) the material is melted at a temperature of 150°C to 300°C,
(4) the molten material is cooled and consequently transformed into an interlayer,
wherein the polyolefin moulding composition substantially contains isotactic high molecular weight polypropylene with a molar mass of 100,000 to 500,000 g/mol, and the polyolefin is produced by means of metallocene catalysts.

2. A method according to claim 1, wherein the polyolefin moulding composition contains at least one polypropylene with up to 10 wt.% of ethylene or a second olefin as comonomer.

3. A method according to one or more of claims 1 to 2, wherein the polyolefin moulding composition exhibits an MFR (230/2.16) of 0.3 to 260 g/10 min.

4. A method according to claims 1 to 3, wherein the film or sheet is subjected to conversion processing in a method step (5).

5. A method according to claim 5, wherein in a method step (6) the material from method steps (4) or (5) is processed into articles.

6. A method as claimed in one or more of claims 1 to 5, wherein the material from method step (1) or (2) is homogenised in a method step (7) and rolled in a method step (8) and the material is then introduced into method step (4).

7. A method as claimed in one or more of claims 1 to 6, wherein at least one material according to method step (3) is applied onto a substrate, such as metal, wood, polymeric material, textiles of natural or synthetic fibres or paper.

8. A method as claimed in one or more of claims 5 to 7, wherein the material is mono- or biaxially oriented in method step (6).

9. Use of films and sheets obtainable by a method according to one or more of claims 1 to 8 for producing articles.

## Revendications

1. Procédé pour la production de feuilles et de couches,
(1) une masse de moulage en polyoléfine présentant une granulométrie de 20 µm à 5000 µm étant utilisée,
(2) la masse de moulage en polyoléfine étant mélangée, en masse fondue, avec au moins un additif et façonnée,
(3) le matériau étant fondu à une température de 150°C à 300°C,
(4) le matériau fondu étant refroidi et amené sous forme d'une couche intermédiaire,
la masse de moulage en polyoléfine contenant essentiellement du polypropylène isotactique de haut poids moléculaire présentant une masse molaire de 100 000 à 500 000 g/mole, et la polyoléfine étant préparée au moyen de catalyseurs de type métallocène.

2. Procédé selon la revendication 1, la masse de moulage en polyoléfine contenant au moins un polypropylène comprenant jusqu'à 10% en poids d'éthylène ou une deuxième oléfine comme comonomère.

3. Procédé selon l'une ou plusieurs des revendications 1 à 2, la masse de moulage en polyoléfine présentant un indice de fluidité à chaud (MFR - 230/2,16) de 0,3 à 260 g/10 min.

4. Procédé selon les revendications 1 à 3, la feuille ou la couche étant confectionnée dans une étape de procédé (5).

5. Procédé selon la revendication 5, le matériau provenant des étapes de procédé (4) ou (5) étant transformé en objet dans une étape de procédé (6).

6. Procédé selon l'une ou plusieurs des revendications 1 à 5, le matériau de l'étape de procédé (1) ou (2) étant homogénéisé dans une étape de procédé (7) et laminé dans une étape de procédé (8) et le matériau étant ensuite utilisé dans l'étape de procédé (4).

7. Procédé selon l'une ou plusieurs des revendications 1 à 6, au moins un matériau selon l'étape de procédé (3) étant appliqué sur un substrat tel qu'un métal, du bois, un matériau polymère, des textiles de fibres naturelles ou synthétiques ou du papier.

8. Procédé selon l'une ou plusieurs des revendications 5 à 7, le matériau étant orienté monoaxialement ou biaxialement dans l'étape de procédé (6).

9. Utilisation de feuilles et de couches pouvant être obtenues selon un procédé selon l'une ou plusieurs des revendications 1 à 8 pour la production d'objets.
